# EUROPEAN PATENT SPECIFICATION

(11) **EP 1 495 529 B1**
(45) Date of publication and mention of the grant of the patent: **11.03.2009**
(21) Application number: 03715002.6
(22) Date of filing: 14.04.2003
(51) Int. Cl.: H02K 9/22, H02K 5/04, B60B 11/04

(54) **FASTENING OF THE STATOR OF A FLAT ELEVATOR MOTOR**
BEFESTIGUNG DES STATORS EINES FLACHAUFZUGSMOTORS
FIXATION D'UN STATOR DE MOTEUR DE MONTE-CHARGE

(30) Priority: 17.04.2002 FI 20020740
(43) Date of publication of application: 12.01.2005
(73) Proprietor: Kone Corporation, 00330 Helsinki (FI)
(72) Inventor: AULANKO, Esko, FIN-04230 Kerava (FI); MUSTALAHTI, Jorma, FIN-05620 Hyvinkää (FI); HUPPUNEN, Jussi, FIN-53850 Lappeenranta (FI)
(74) Representative: Zipse Habersack Kritzenberger
(86) International application number: PCT/FI2003/000284
(87) International publication number: WO 2003/088448

(56) References cited:
- EP-A- 0 327 338
- FR-A- 2 787 941
- US-A- 4 689 512
- US-A- 5 962 948

## Description

The present invention relates to an arrangement for mounting the stator in a flat elevator motor having a motor body, a stator fastened to it and a rotor.

The physical dimensions of the elevator machine have a relevance to the size of the elevator shaft and/or building, depending on where the machine is placed. When the elevator machine is placed in the elevator shaft or beside it, the thickness of the elevator machine has an essential importance regarding the space required.

US patent specification 5,962,948 discloses an elevator machine designed to be placed in the elevator shaft and having a flat, discoid elevator motor comprising a stator and a rotor. The rotor comprises a rotor disc provided with permanent magnets a traction sheave mounted on it. The stator has a stator core and windings. The stator is fastened between the motor body and the rotor by a screw fastening technique.

Another stator fastening arrangement according to the prior art is disclosed in document FR-U-2787941.

The object of the present invention is to achieve a new type of mounting structure for fastening the stator to the body of the motor, by means of which it is possible to improve the cooling of the stator and to achieve a stator structure that is very compact as compared with prior-art solutions.

In the mounting structure of the invention, the stator is fitted inside a trough-like mounting part, wherein the space between the stator winding and the mounting part is filled with a thermally conducting filler serving to conduct heat from the stator to the mounting part. The characteristic features of the invention are presented in detail in the claims below.

The invention makes it possible to achieve an economical, simple and reliable stator fastening arrangement. In addition, efficient cooling and consequently a high power density as well is achieved. In the solution of the invention, the insulating gaps can be smaller than in prior-art solutions, allowing the elevator motor to be made shorter in the axial direction than prior-art motors, which is very important especially in the case of elevator motors designed to be placed in the elevator shaft. In addition, the use of a filler prevents soiling of the stator windings. Therefore, the protection rating of the motor can be relatively easily raised.

Moreover, the mounting part and the stator form a single unit, which leads to a rigid and firm structure.

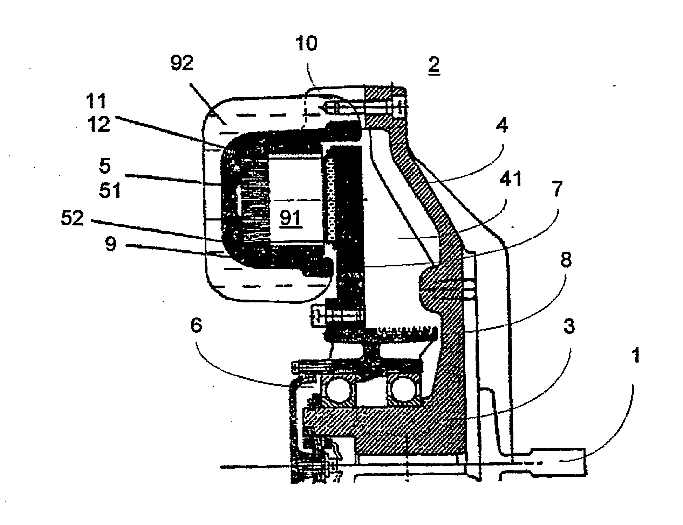

In the following, the invention will be described in detail by the aid of an example with reference to the attached drawing, which illustrates the stator mounting arrangement of the invention.

The figure presents a flat, discoid elevator motor 2 used in a gearless elevator machine placed close to a guide rail 1. It comprises a disc 4 formed in the motor body 3 and a stator 5 fastened to said disc. The stator comprises a winding core 51 and windings 52. Mounted with bearings 3 on the body 3 are a round rotor disc 7 and a traction sheave 8. The disc 4 has on its inner side a recess 41 formed for the rotor.

The stator 5 is mounted outside the rotor 7, i.e. on the opposite side of the disc 4 in the trough 91 of a trough-shaped mounting part 9 made of e.g. aluminum. The mounting part 9 is fastened to the disc 4 with screws 10 at the outer edge. The mounting part 9 is provided with cooling fins 92 on the outside. The space 11 between the winding 52 and the mounting part 9 is filled with resin 12, which has a good thermal conductivity. Thus, the winding 52 and especially its ends are effectively cooled inside the mounting part 9. The resin also binds the stator fast to the mounting part 9, no other fastening elements being thus needed.

It is obvious to the person skilled in the art that different embodiments of the invention are not limited to the example described above, but that they may be varied within the scope of the claims presented below.

## Claims

1. Stator fastening arrangement in a flat elevator motor (2) having a motor body (4) provided with a stator (5) comprising a stator core (51) and a winding (52), and a rotor (7) fitted in conjunction with the stator, the stator (5) being fitted within a substantially trough like mounting part (9) fastened to the motor body (4), and the space between the mounting part (9), and the stator (5) being filled with a thermally conductive filling material (12) serving to conduct heat from the stator to the mounting part (9), **characterized in that** the stator (5) is fastened to the mounting part (9) by means of the filling material.

2. Fastening arrangement according to claim 1, **characterized in that** the filling material is a castable material, preferably resin.

3. Fastening arrangement according to claim 1 in an elevator motor having a discoid body (4) and a rotor (7), **characterized in that** the trough-like mounting part (9) is fastened to the motor body (4) at the outer edge by means of fastening elements (10), the stator being disposed on the opposite side of the motor body (4) relative to the rotor.

4. Fastening arrangement according to claim 1, **characterized in that** the mounting part (9) is made of aluminium.

5. Fastening arrangement according to claim 1, **characterized in that** the mounting part (9) is provided with cooling fins (92).

6. Fastening arrangement according to claim 1, **characterized in that** the electric motor is a discoid elevator motor.

## Patentansprüche

1. Statorbefestigungsanordnung in einem flachen Aufzugsmotor (2), der einen Motorkörper (4) aufweist, der mit einem Stator (5) versehen ist, umfassend einen Statorkern (51) und eine Wicklung (52), und einen Rotor (7), der in Verbindung mit dem Stator angeordnet ist, wobei der Stator (5) innerhalb eines im Wesentlichen trogförmigen Montageteils (9) aufgetragen ist, welcher an dem Motorkörper (4) befestigt ist, und der Raum zwischen dem Montageteil (9) und dem Stator (5) mit einem thermisch leitfähigen Füllmaterial (12) gefüllt ist, das dazu dient, Hitze von dem Stator zu dem Montageteil (9) zu leiten, **dadurch gekennzeichnet, dass** der Stator (5) an dem Montageteil (9) mittels des Füllmaterials befestigt ist.

2. Befestigungsanordnung nach Anspruch 1, **dadurch gekennzeichnet, dass** das Füllmaterial ein gießbares Material, vorzugsweise Harz, ist.

3. Befestigungsanordnung nach Anspruch 1 in einem Aufzugsmotor, der einen scheibenförmigen Körper (4) und einen Rotor (7) aufweist, **dadurch gekenntzeichnet, dass** das trogförmige Montageteil (9) an dem Motorkörper (4) an der Außenkante mittels Befestigungselementen (10) befestigt ist, wobei der Stator auf der relativ zu dem Rotor gegenüberliegenden Seite des Motorkörpers (4) angeordnet ist.

4. Befestigungsanordnung nach Anspruch 1, **dadurch gekennzeichnet, dass** das Montageteil (9) aus Aluminium besteht.

5. Befestigungsanordnung nach Anspruch 1, **dadurch gekennzeichnet, dass** das Montageteil (9) mit Kühlrippen (92) versehen ist.

6. Befestigungsanordnung nach Anspruch 1, **dadurch gekennzeichnet, dass** der elektrische Motor ein scheibenförmiger Aufzugsmotor ist.

## Revendications

1. Système de fixation de stator dans un moteur de monte-charge (2) ayant un corps de moteur (4) muni d'un stator (5) comportant un noyau de stator (51), un enroulement (52) et un rotor (7) mis en place conjointement avec le stator, le stator (5) étant mis en place à l'intérieur d'une partie de montage (9) essentiellement en forme d'auge fixé au corps de moteur (4), et un espace entre la partie de montage (9) et le stator (5) étant rempli d'une matière de remplissage thermiquement conductrice (12) servant à conduire la chaleur du stator à la partie de montage (9), **caractérisé par le fait que** le stator (5) est fixé à la partie de montage (9) au moyen de la matière de remplissage.

2. Système de fixation selon la revendication 1, **caractérisé par le fait que** la matière de remplissage est une matière de coulage, préférentiellement de la résine.

3. Système de fixation selon la revendication 1 dans un moteur d'ascenseur ayant un corps (4) en forme de disque et un rotor (7), **caractérisé par le fait que** la partie de montage (9) en forme d'auge est fixée au corps de moteur (4) sur le bord extérieur au moyen d'éléments de fixation (10), le stator étant disposé sur le côté opposé du corps de moteur (4) par rapport au rotor.

4. Système de fixation selon la revendication 1, **caractérisé par le fait que** la partie de montage (9) est constituée d'aluminium.

5. Système de fixation selon la revendication 1, **caractérisé par le fait que** la partie de montage (9) est munie d'ailettes de refroidissement (92).

6. Système de fixation selon la revendication 1, **caractérisé par le fait que** le moteur électrique est un moteur d'ascenseur en forme de disque.
